(19)

Europäisches Patentamt

European Patent Office

Office européen des brevets

(11) EP 0 273 654 B2

(12) NEW EUROPEAN PATENT SPECIFICATION

(45) Date of publication and mention of the opposition decision:
**06.12.2000 Bulletin 2000/49**

(45) Mention of the grant of the patent:
**23.02.1994 Bulletin 1994/08**

(21) Application number: **87311161.1**

(22) Date of filing: **18.12.1987**

(51) Int. Cl.$^{7}$: **C08F 210/18**

(54) **Unsaturated ethylene polymers**

Ungesättigte Äthylenpolymere

Polymères insaturés de l'éthylène

(84) Designated Contracting States:
**AT BE DE ES FR GB IT LU NL SE**

(30) Priority: **19.12.1986 US 944381**

(43) Date of publication of application:
**06.07.1988 Bulletin 1988/27**

(73) Proprietor:
**EXXON CHEMICAL PATENTS INC.**
**Linden, New Jersey 07036-0710 (US)**

(72) Inventors:
- **Welborn, Howard Curtis, Jr.**
  **Houston Texas 77019 (US)**
- **Austin, Richard Graham**
  **Kingwood Texas 77345 (US)**

(74) Representative:
**Dew, Melvyn John et al**
**Exxon Chemical Europe Inc.**
**Law Technology**
**P.O.Box 105**
**1830 Machelen (BE)**

(56) References cited:

**EP-A- 273 655**
**EP-A- 275 676**
**EP-A- 0 129 368**
**EP-A- 0 223 394**
**GB-A- 2 099 836**
**US-A- 4 306 041**

- **WO-A-88/02009**



Printed by Xerox (UK) Business Services
2.16.7 (HRS)/3.6

## Description

This invention relates to a process for preparing an ethylene interpolymer which may have residual unsaturation, formed by the polymerization of ethylene and an alpha, internal nonconjugated diene (diolefin) comonomer. Optionally, other monomers are also incorporated in the polyethylene structure. Polymer densities are indicated herein in g/ml.

Polymers consisting primarily of ethylene monomer are widely recognized materials for a great variety of uses in many fields. Certain other polymers have disadvantages for some applications because of the physical properties associated with the polymer structure, whether from the incorporation of a comonomer or from the method of polymerization of the polymer. Most homopolymers and copolymers of alpha-olefins are widely used because of their inexpensive nature and excellent physical properties including transparency, moldability, chemical resistance, and other aspects. However, such polymers generally do not have widespread suitability for other substrates, surfaces, and materials due to their non-polar structure. Accordingly, most such homopolymers, copolymers, and higher interpolymers are not generally suitable for coatings, printing, and antistatic applications. Various methods and treatments have been devised to overcome the general shortcoming of such polymers. These include treating the polymers with oxidizing agents or degrading agents, but such measures have not always proven satisfactory for all applications.

The invention relates to processes for preparing ethylene copolymers, terpolymers, and higher interpolymers of ethylene and other copolymerizable comonomers which have alpha, internal nonconjugated unsaturation. Such polymers always include a comonomer moiety which provides unsaturation in the polymer, the unsaturation being for subsequent modification or use in the various applications for which the ethylene polymers are not otherwise suitable. Polymers of ethylene are needed which not only incorporate residual unsaturation but also have outstanding physical properties above those commonly found in the predecessors of the present invention. Ethylene and other alpha-olefins are traditionally polymerized or copolymerized in the presence of catalytic complexes formed from mixtures of transition metal compounds and aluminum alkyls. Such complexes necessarily produce polymers and interpolymers which have physical properties depending on the catalyst and method of polymerization.

Prior art polymers have suffered from one or more difficulties affecting their physical properties, especially for the residual unsaturation polymers to which the present invention is related since these polymers may not often be modified or degraded without affecting the residual unsaturation content. The difficulties include broadened molecular weight distributions, broadened composition distribution of comonomer, and inefficient distribution or dispersion of the comonomer along the polyethylene chain of the copolymer. Of course, it is recognized that the polymers of the invention have residual unsaturation along the side chains substituted on the main polyethylene chain of the invention.

Broadened molecular weight distribution of a polymer strongly influences its melt flow properties and such polymers tend to have a high concentration of high molecular weight molecules making them subject to orientation. As a result, such resins produce strongly anisotropic physical properties in the machine transverse direction of a fabrication process and such properties are detrimental to a number of end use applications.

Broad molecular weight distribution resins also frequently contain a significant portion of quite low molecular weight material. These molecules almost invariably contain high concentrations of comonomer and therefore tend to be amorphous or of a low degree of crystallinity. Consequently, these materials exude to the surface of fabricated parts causing tackiness where not desired and/or interfere with other additives in the polymer designed according to the particular application. An example of this is the surface active property associated with slip agents in blown or cast film.

Most prior art copolymers tend to have a very broad composition distribution of comonomer, i.e., the distribution of comonomer among the polymer molecules being nonuniform, some molecules having a relatively high concentration of comonomer while others have a relatively low concentration of comonomer. This structural property of the prior art polymers allows that portion with low comonomer content to have a high melting point and vice versa leading to a broad melting range for the entire polymer composition. Of course the presence of a high melting component is disadvantageous for many applications where softness is desired and may lead to undesired stiffness. On the other hand, the presence of high comonomer content materials of low melting point frequently results in a high quantity of extractables.

Prior art materials are generally characterized by relatively inefficient use of comonomer moieties along the polyethylene chains. The distribution of the comonomer along the chain is very important in determining the efficiency of use of the comonomer and the resulting properties of the polymer, especially with respect to crystallizability of the polymer. Such prior art polymers tend to have a high degree of clustering of the comonomer moieties along the polyethylene chain. That is, the comonomer units are adjacent or nonisolated along the chain resulting in inefficient use of the comonomer since only a single polyethylene chain interruption results when several comonomer units are contiguous. This has extremely important implications in the total amount of comonomer required to achieve the desired crystallinity. Also, it is often disadvantageous to include unneeded portions of comonomer, especially when dealing with less available and more expensive diene comonomers. Frequently, the requirement to use a higher portion of comonomer also tends to force the comonomer into low molecular weight, high comonomer content ends of the molecular weight

distribution.

EP 273 655 and EP 275 676 having the same priority and filing dates do not describe processes for making interpolymers containing 0.01 to 10 mole % of alpha-internal non-conjugated dienes.

EP 323 454 (& WO-A- 88/02009) which is an Art.54(3)(4)EPC document describes a process for making an interpolymer containing more than 10 mole % of alpha-internal non-conjugated dienes (cf. Examples 24 and 25 therein).

EP 223 394 describes processes for making interpolymers containing from 0 to 25 mole % of alpha-internal non-conjugated diene but does not teach doing so specifically by using metallocene catalysts.

Accordingly, improved unsaturated ethylene copolymers, terpolymers, and interpolymers in the entire range of amorphous to highly crystalline polymers is needed.

## BRIEF DESCRIPTION OF THE DRAWINGS

Figure 1 is a graphic and verbal depiction of the concept of cluster index;
Figure 2 is a plot of cluster index against mole percent comonomer for several commercial resins and the unsaturated resin made by the process of the invention;
Figure 3 is an overlay of a plot of the molecular weight distribution of resin made by the process of the invention over that for commercial resin 3, plotted against weight percent comonomer content;
Figure 4 is a series of plots of comonomer distribution in weight percent versus elution temperature for resin made by the process of the invention and several commercial resins;
Figure 5 is a plot evidencing the correlation of elution temperature and polymer composition in branches/1000 carbon atoms (mole percent comonomer);
Figure 6 is a plot for comparison to Figure 6A, showing the relative breadth of melting point for some commercial polymers;
Figure 6A is a plot of the melting point by DSC for three copolymers made by the process of the invention (Examples 1 - 2A).

## SUMMARY OF THE INVENTION

The invention is directed to processes for providing polymers of ethylene and at least one comonomer wherein the at least one comonomer is an alpha, internal nonconjugated diolefin, the polymer having excellent physical properties and residual unsaturation. The invention provides a process for preparing an interpolymer of ethylene and at least one comonomer having a molecular weight distribution of 3.0 or less comprising from 0.1 to 10 mole % of an alpha, internal non-conjugated diene and from 0 to 15 weight percent of an alpha-olefin which process includes polymerising ethylene and comonomer using a metallocene catalyst of the formula $(Cp)_mMR_nR^1p$ wherein Cp is a substituted cyclopentadienyl ring, M is group IVB, VB or VIB transition metal ; R and $R^1$ are independently selected halogen, hydrocarbyl group or hydrocarboxyl groups having from 1-20 carbon atoms; m = 1-3, n = 0-3; p = 0-3 and the sum of m+n+p equals the oxidation state of M and alumoxane, the resulting interpolymer having incorporated in its structure at least 3 mole percent units of said at least one comonomer and having a cluster index of 9 or less determined by the formula $10[(X)-(EXE)]/[2(X)^2-(X)^3]$ where (X) is the mole % of total comonomer units in the copolymer and (EXE) is the mole fraction of the triad segment of 3 monomer units containing ethylene-comonomer-ethylene.

When used herein, the term copolymer or interpolymer is intended to include terpolymers and higher interpolymers of ethylene as well as the simple copolymer of ethylene with a single diolefin or mixture of such alpha, internal nonconjugated diolefins.

The polymers made by the process of the present invention may have a broad range of densities and, therefore, a broad range of applications. In addition, the residual unsaturation of the copolymer may vary quite widely by design according to the invention so as to provide a copolymer of particular suitability for certain applications. The polymers may be liquid or solid.

Preferably the interpolymer has a composition distribution wherein at least 55 weight percent, preferably 65 weight percent, more preferably 70 weight percent of the copolymer molecules have a comonomer content within 50 percent of the median comonomer content in mole percent of said composition.

By way of explanation, a polymer having a median (equal amount greater and less than) comonomer content of 2.0 mole percent would have 55 weight percent, preferably 65, more preferably 70 weight percent of its composition with a comonomer content of 1.0 to 3.0 mole percent.

Preferably the resulting interpolymer has a molecular weight distribution (Mw/Mn) of 2.5 or less, preferably about 2.0.

The composition produced the polymerization of ethylene and at least one comonomer comprising an alpha, internal nonconjugated diene, preferably has incorporated in its structure at least 5 mole percent, more preferably 10 mole percent of units of said at least one comonomer, said composition preferably having a cluster index of between 5 to 0.

The resulting polymers have improved properties resulting especially from the more efficient use of diene comonomer in controlling the crystallizability of the polymer. That is, the efficient use of the diene comonomer comprises an improved isolation of the comonomer molecules along the polyethylene chain as not previously achieved for ethylene copolymers having residual unsaturation. Accordingly, the polymers made by the process of the present invention not only have especially good application for those uses previously employing residual unsaturation polymers, but also have excellent overall physical properties marking a significant improvement over those materials previously available. The improved properties result from the isolated dispersion of the diene comonomer and other comonomers along the sequence of the polymer molecule.

The process of the invention may involve batchwise or continuously bulk polymer compositions having the properties and characteristics described herein.

The alpha, internal nonconjugated diene comonomers of the invention may be linear or cyclic, branched or unbranched, short or long chained.

The polymers produced by the process of the invention may contain at least a minimum of 3 mole percent total comonomer based on the moles of ethylene and comonomers, so as to provide wide dispersion of the comonomers in the polymer product composition. This generally limits the density to a number below 0.930 g/cm$^3$, preferably below 0.920 g/cm$^3$ depending on the copolymers chosen and the method of incorporation. Thus, where only a two component polymer composition is formed from ethylene and the alpha, internal nonconjugated diene, at least 3 mole percent diene units and no more than 97 mole percent ethylene units are present. For terpolymers and higher interpolymers of the invention, only 0.1 mole percent or more, more preferably 1 mole percent or more of the diene need be incorporated so long as the total incorporation of comonomers (diene and other[s]) is at least 3 mole percent for this embodiment.

Despite incorporation of at least about 3 mole percent comonomer units in one embodiment of the polymer compositions of the invention the polymers nevertheless have a low cluster index. Preferably, especially for solid unsaturated polymers, the ethylene units are the predominant component on a molar basis.

The polymers made by the process of the invention have improved properties attributable to the more uniform content of diene and other comonomer among the polymer molecules.

The interpolymers of the present invention have residual unsaturation and exhibit very little clustering of the comonomer molecules along the polyethylene chain both with respect to the diene comonomer and any other polymerizable comonomer formed in the polyethylene chain. As a result, the use of comonomer in forming the copolymers of the invention is very efficient in controlling crystallizability, discourages formation of high comonomer content/low molecular weight ends, reduces cost and improves properties.

Also in this preferred embodiment of the present invention, polymers produced by the process of the invention exhibit relatively narrow molecular weight distribution of less than 3.0. That is, they have a relatively low ratio of weight to number molecular weight. The absence of the high molecular weight molecules reduces the tendency for orientation in fabrication processes and increases isotropic machine/transverse direction physical properties. The absence of low molecular weight molecules (low tail) in the copolymers of the invention reduces the tendency to form tacky surfaces and otherwise interfere with surface active agents in certain applications.

The absence of clustering is generally reflected in easily measured characteristics of the invention such as melting point temperature and the like.

The polymers made by the process of the present invention are capable of being fabricated into a wide variety of articles, as is known for homopolymers of ethylene and copolymers of ethylene and higher alpha-olefins. Furthermore, the polymers typically have residual unsaturation which permits their use in additional applications where the residual unsaturation may be used for bondability, printability or crosslinkability.

The unsaturated polymers may vary in density across a broad scale from essentially amorphous materials to highly crystalline materials. They may be liquids (such as for certain rubbers and lubricants and waxes) or solids.

The molecular weight of the polymers may vary over a broad range. Preferably the polymers have a number average molecular weight of 500 or higher, preferably 1000 or higher, more preferably about 10,000 or higher. Typically, materials used for elastomers applications are either copolymers or terpolymers (often with propylene monomer) in the density range of 0.86-0.87. Typically, these polymers contain 30 weight percent or more of the comonomers and the balance ethylene. Frequently, the elastomers of the unsaturated polymers of the invention will have as much as 48 weight percent of the comonomer present.

The unsaturated polymers made by the process of the present invention may also include plastomers in the density range of 0.87-0.900 g/cm$^3$ and containing from about 20-30 weight percent of comonomer. Also available as the unsaturated polymers are the very low density polyethylene materials of density range 0.900-0.915 g/cm$^3$ and having

from 10-20 weight percent comonomer present.

The unsaturated polymers made by the process of the invention may be formed as a linear low density polyethylene type polymer in the density range of 0.915 to 0.940 g/cm$^3$ and containing from 5-10 weight percent of the comonomers. The unsaturated polymers of the invention may also be used in the form of high density polyethylene having a density of 0.940 g/cm$^3$ and above and containing up to about 5 weight percent comonomers. The unsaturated polymers of the invention may also form amorphous materials below a density of 0.86 including tackifier resins.

Sequence distributions, or the distribution of comonomer units along a polymer chain, in, e.g., linear low density polyethylenes is a factor affecting the cost of the polymer because it affects the amount of comonomer required to achieve a desired polymer density. If comonomer is efficiently incorporated, i.e., with little clustering of comonomer units, in a linear low density polyethylene, less comonomer is required to depress the density. Thus, the number of comonomer runs in a copolymer chain and the length of each run is significant in the structure of the polyethylene molecules and affects the physical properties of the polymer. The polymers made by the process of the invention are marked by a relatively high number of single units of comonomer in the polymer chain relative to the number of units containing more than a single comonomer molecule in comparison to unsaturated polymers of the prior art.

The unsaturated ethylene polymers are hereinafter described by their "cluster index". This index reflects the degree to which the polymers have individual comonomer units dispersed along the polyethylene chain, preferably in favoring isolation of individual units over groups of two or more units. Given a minimum level of comonomer, the unsaturated ethylene polyers are especially noted for their efficient use of comonomer molecules by having more isolated comonomer molecules along the polyethylene chain and fewer clusters of molecules of the comonomer in the polyethylene chain. That is, the unsaturated polymers tend to deviate from random comonomer distribution in the direction of fewer contiguous comonomer sequences. Thus, the cluster index permits a quantitative evaluation of the deviation from a random distribution of comonomer in the polymer chain.

In the cluster index description given herein, there are two reference points. The reference point 0 describes a polymer which has only isolated comonomer insertions without any contiguous comonomer units in a cluster; of course this describes pure homopolymers also. The second reference point is the number 10 describing an ethylene copolymer having comonomer distribution that is exactly random (Bernoullian) and thus containing a predictable amount of contiguous comonomer units. Any polymer having a cluster index value greater than 10 contains proportionally more contiguous comonomer sequences than predicted by the random distribution. Any polymer having a cluster index value between 0 and 10 is indicated to have fewer contiguous sequences than a random distribution polymer (given a minimum of comonomer). These values are typically associated with the method of producing the polymer including the catalyst used and conditions of polymerization.

The cluster index comparisons are best made for polymers having comparable comonomer mole contents or densities. The measurement of the clustering of the comonomer along the polyethylene chain in a given polymer may be determined by a study using carbon 13 nuclear magnetic resonance spectroscopy ($C^{13}$ NMR). Using this tool for evaluation, the cluster index may be given as follows:

$$\text{Cluster index} = 10\,[(X) - (EXE)]/[2(X)^2 - (X)^3]$$

where (X) is the mole % of total comonomer molecules in the copolymer and (EXE) is the mole fraction of the triad segment of 3 monomer units containing ethylene-comonomer-ethylene. These concentrations are easily measured using $C^{13}$ NMR.

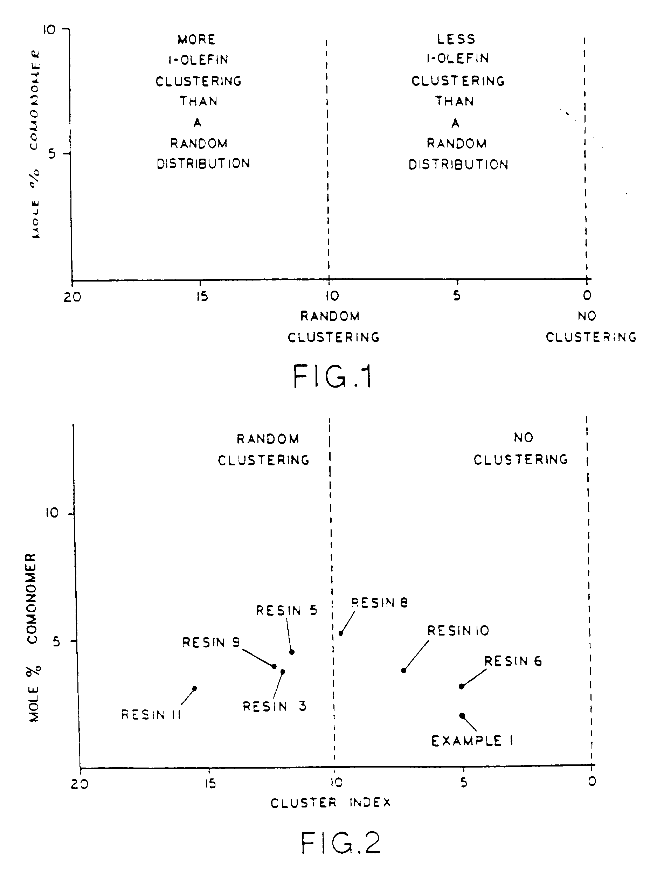

The basis for the cluster index is further explained and exemplified below by the following discussion and in reference to drawing Figure 1.

Referring now to drawing Figure 1 the cluster index may be derived as follows, using the reference point 10 as random clustering expected in a polymerization and the reference point 0 as that point for no clustering in a polymer (no units of more than one comonomer molecule contiguous). Accordingly,

$$\text{Cluster index} = 10 - 10 \times \frac{[(EXE)_{observed} - (EXE)_{random}]}{[(X) - (EXE)_{random}]}$$

where "X" is the mole % comonomer in the ethylene copolymer and EXE is the corresponding triad configuration of a single comonomer molecule contiguous to two ethylene molecules (units).

The term $(EXE)_{random}$ serves as a reference point and its value can be calculated from any suitable statistical model. In this case the Bernoullian model was chosen. For the Bernoullian model

$$(EXE)_{random} = [1 - X]^2[X].$$

Thus, substituting this value of $(EXE)_{random}$ in the formula for cluster index above gives:

$$\text{Cluster index} = 10\,[(X) - (EXE)_{observed}]/[2(X)^2 - (X)^3]$$

Accordingly, it can be readily seen from drawing Figure 1 that those polymers having more comonomer clustering than a random distribution appear to the left of the reference point 10 and those having less comonomer clustering than a random distribution appear between 0 and 10.

In Figure 2, polymers are plotted according to their cluster index as described for Figure 1 and using the vertical axis to plot mole percent of comonomer of the polymer samples. It is readily apparent from drawing Figure 2 that those polymers of the invention have a reduced cluster index (for a given density) over polymers of the prior art such as those commercial polymers plotted and appearing near or to the left of reference point 10 (random clustering). The technique of using the $C^{13}$ NMR to obtain the information for cluster index is known to the skilled artisan.

Also shown for comparison in Figure 2 is the cluster index of Dowlex 2088 octene LLDPE copolymer (Resin 9), Dowlex 2517 octene LLDPE copolymer (Resin 10), and Union Carbide 7099 hexene LLDPE copolymer (Resin 11).

The cluster index improvement in the polymers of the invention versus polymers of the prior art is detectable at 3 mole percent comonomer content, readily discernable at 5 mole percent, and remarkable at about 10 mole percent or higher.

The above described cluster index may be considered to be of the first order or based on the total number of comonomer units less the isolated (EXE) comonomer units.

The unsaturated ethylene polymers made by the process of the present invention are preferably marked by a relatively narrow molecular weight distribution in comparison to prior art polymers. The molecular weights and molecular weight distributions were determined using Waters 150C Gel Permeation Chromatograhic Instruments. These instruments were equipped with refractive index detectors operated at 145°C and at a solvent flow rate of 1 milliliter per minute. The solvent used was ultra-high purity grade 1,2,4-trichlorobenzene obtained from Burdick and Jackson Company. Prior to use, the solvent was filtered through a 0.5 µm filter and stabilized with 120 ppm BHT. Three Waters styragel columns were used with nominal porosities of 50, 1000, and 100 000 nm (500, 10,000, and 1,000,000 angstroms). Each polymer sample was dissolved in trichlorobenzene solvent at 145°C to a concentration level of about 0.1 weight percent and thereafter filtered through a 0.5 µm porous metal filter. About 300 microliters of this solution was then injected into the gel permeation chromatograph. Analysis time was typically 45 minutes. Calibration of the instrument for molecular weight determination was accomplished with the use of narrow molecular weight distribution polystyrene standards obtained from Toyo Soda Manufacturing Company. Sixteen of the standards were used ranging in molecular weight from 526 - $5.2 \times 10^6$. Molecular weight distributions of these standards were listed at 1.0-1.15 as measured by the ratio of weight average molecular weight to number average molecular weight. These polystyrene molecular weight data were then converted to a polyethylene basis with the use of the Mark-Houwink equation and the use of the following constants:

for polyethylene $K = 5.17 \times 10^{-4}$, $a = 0.70$
for polystyrene $K = 2.78 \times 10^{-4}$, $a = 0.70$.

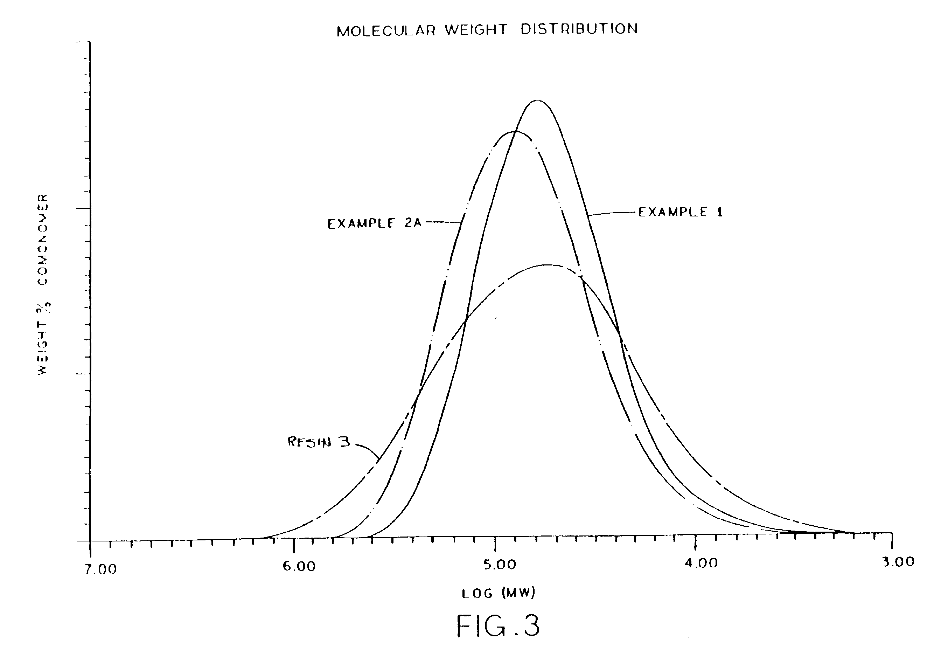

Each sample was run twice and the calculated results average to yield the molecular weight information reported. The molecular weight distribution of the resin of Example 1 below was plotted for comparison on the same plot with that for Exxon LL3001 linear low density polyethylene resin mole percent comonomer on a scale of the log of molecular weight versus weight percent of the polymer in the molecular weight range. As can be seen from drawing Figure 3 the unsaturated polymer of the invention has a strictly narrower molecular weight distribution than the commercially available linear low density polyethylene.

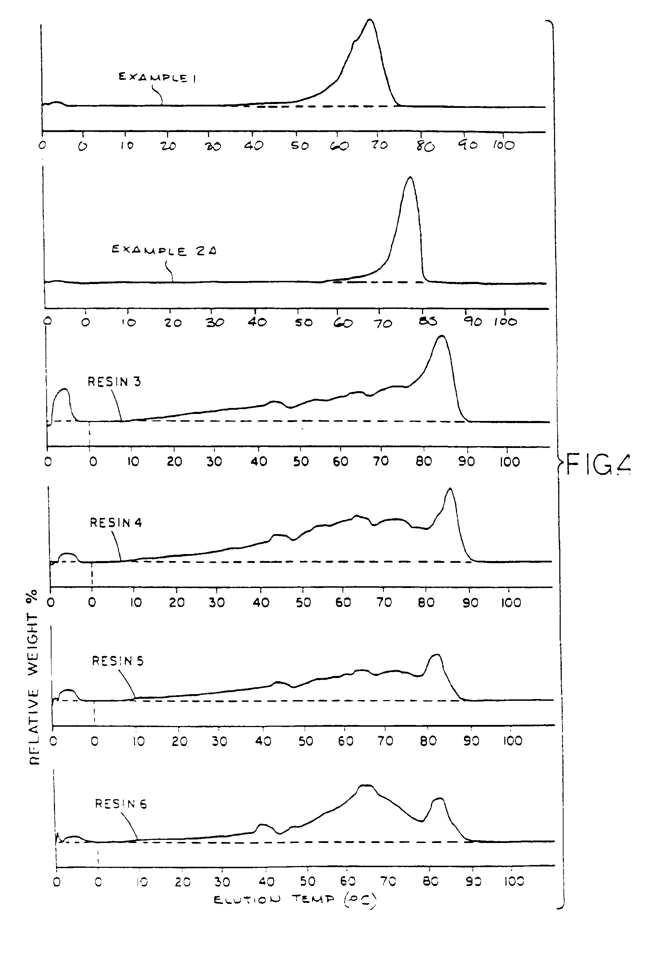

The unsaturated polymers of the present invention preferably also have a narrow distribution of comonomer amongst molecules of the polymer in comparison to prior art polymers. For comparison, drawing Figure 4 reflects the narrow distribution of the unsaturated polymer of Example 1 in comparison to the relatively broad comonomer distribution polymers of the prior art. In Figure 4 the weight percent of copolymer (having a given comonomer content) is plotted against an elution temperature which directly reflects comonomer content. A better understanding of this preferred embodiment of the polymers of the present invention will be had by a review of Figure 4 and the following discussion.

Crystalline copolymers may be fractionated by comonomer content over a temperature range from 0-120°C in tetrachloroethylene solvent. The compositions of the fractions of the copolymer are determined and a solution temperature versus composition calibration curve has been constructed based on the data obtained. Using this calibration curve, the temperature scale of the solubility distribution curve can be converted to a composition scale and a composition distribution curve is thus obtained as in drawing Figure 4.

A machine has been assembled to automatically determine the solubility distribution curve of a crystalline copolymer. In the measuring instrument, a steel column is packed with small mesh glass beads and immersed in an oil

bath whose temperature can be programmed over a temperature range from about 0°C-150°C. The tetrachloroethylene solvent may be prevented from boiling by operating the instrument at about 3 atmospheres pressure under an automatic regulator. A weighed amount of sample, usually about 1.6 grams, is placed in a sample preparation chamber, sealed, and repeatedly evacuated and filled with argon. A metered volume of solvent is then pumped into the sample preparation chamber where it is stirred and heated to obtain a solution of about 1 percent concentration. A metered volume of this solution, usually about 100 ml is then pumped into the packed column which has been thermostated at a high temperature of usually at least about 120°C.

The polymer solution sample is subsequently crystallized by cooling the polymer in the column to 0°C at a programmed rate of 5°C per hour. The column was then maintained at 0°C for at least an hour. Thereafter, the elution stage of the determination is started by pumping pure solvent through the column at a rate of 6 ml per minute. Effluent from the column passes through the reheater where it is heated to 120°C before passing through an IR detector used to measure the absorbance of the effluent stream. The infrared absorbents of the polymer carbon hydrogen stretching bands at about 2960 centimeter$^{-1}$ serves as a continuous measure of the relative concentration of polymer in the effluent. After passing through the infrared detector the temperature of the effluent is reduced to about 110°C and the pressure is reduced to 1 atmosphere before passing the stream into an automatic fraction collector. In the elution stage, the pure solvent is pumped through the column set at 0°C for one hour. This serves to flush polymer that has not crystallized during the crystallization stage out of the column so that the percent of uncrystallized polymer can be determined from the infrared trace. The temperature is then programmed upward at 10°C per hour to 100°C and at 20°C per hour from 100°C to 120°C.

The compositions of fractions obtained from the various polymers were determined by infrared spectroscopy. The IR compositions are obtained from the intensity of the 1378(cm)$^{-1}$ methyl band, the thickness of the sample, and a calibration curve based on samples whose compositions were determined independently by $C^{13}$ NMR. No corrections for polymer end groups was made in obtaining compositions from infrared data.

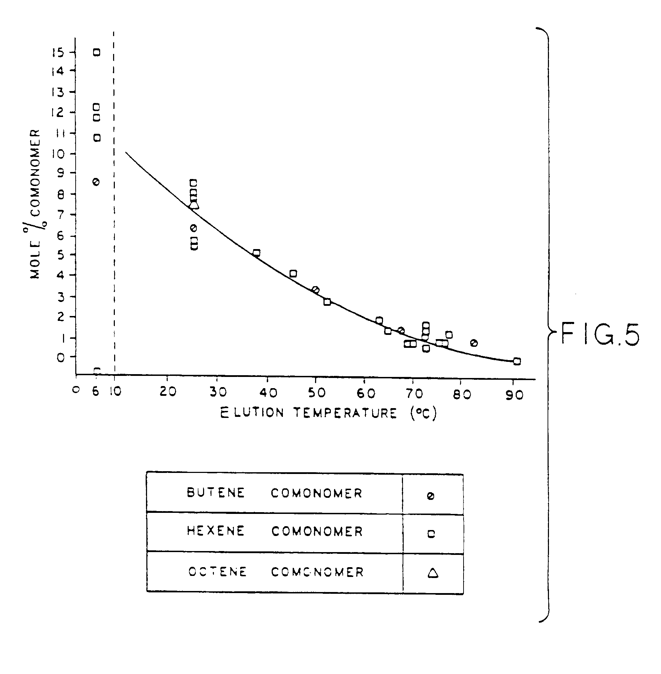

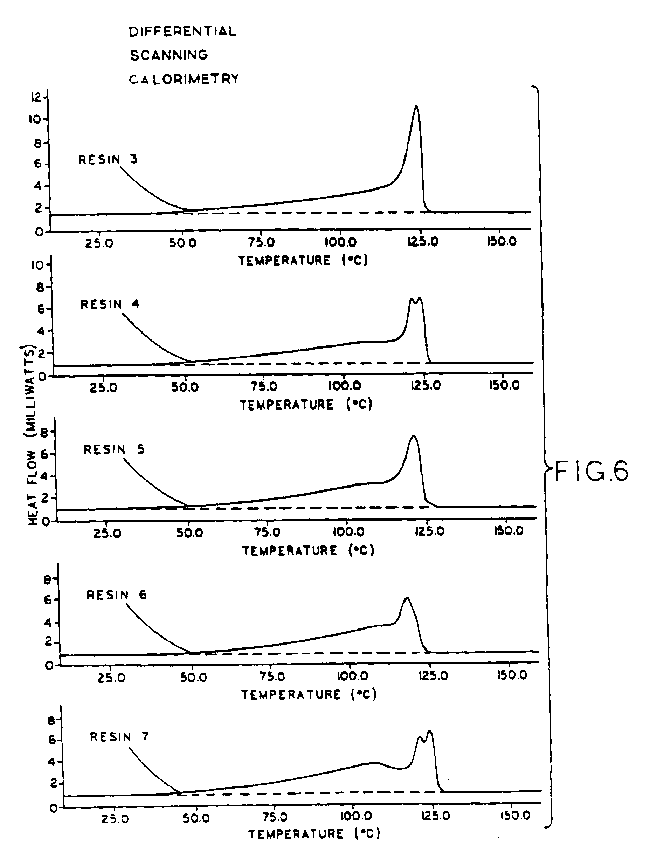

Figure 5 is a plot of the elution temperature versus the comonomer content in mole percent comonomer (branches per 1000 carbon atoms) for the fractions of the sample. The curve "A" has been drawn through the points. Thus, curve A may be used as a correlation between elution temperature and composition of the polymer for temperatures greater than 0°C. The calibration curve is most accurate for fractions with number average molecular weights, $M_n \geqq 10,000$ as determined by size exclusion chromatography.

As seen in drawing Figure 4, samples of polymers tend to have a peak at about 0°C elution temperature. This small peak represents the fraction of total polymer that is not crystallizable at the lowest temperature of the experiment (about 0°C).

In summary, the device and procedure described provide a plot of relative weight percent of polymer versus elution temperature which in turn may be correlated to composition and mole percent comonomer (branches per 1000 carbon atoms) in the polymer chain. Accordingly, drawing Figure 4 is an effective comparison of the comonomer distribution of the unsaturated polymers of the invention to that for certain commercial polymers. As can readily be seen, the composition distribution of the polymer of the invention example is quite narrow in comparison.

The alpha internal nonconjugated dienes which form units of the copolymers (including terpolymers and higher interpolymers) by the process of the invention include a variety of such diolefins exemplified by but not limited to the following:

1,4-hexadiene; 1,4-heptadiene; 1,5-heptadiene; 1,4-octadiene; 1,5-octadiene; 1,6-octadiene; 4-methyl-1,4-hexadiene, 5-methyl-1,4-hexadiene, 4-ethyl-1,4-hexadiene, 5-methyl-1,4-heptadiene; 5-ethyl-1,6-octadiene; 3-vinyl cyclohexene; 4-vinyl cyclohexene; 3-vinyl cyclopentene; cis and trans 1,5,9-decatriene; 5-vinyl norbornene; 1,4-dodecadiene.

Comonomers other than the dienes for the process of the invention include polymerizable comonomers such as acids, esters and other olefins. Suitable olefins include the alpha olefins such as propylene, butene, hexene, octene and 4-methyl-pentene-1.

According to the invention, the alpha-olefin content of the unsaturated ethylene polymers (copolymers) of the invention is less than 15 weight percent, preferably less than 10 weight percent.

In forming the polymers of the present invention it may be necessary to purify, or isolate the diene and other, optional comonomers of the invention in order to obtain incorporation thereof during polymerization. One such recommended technique is passing the comonomer, especially the diene, over alumina to remove extraneous materials.

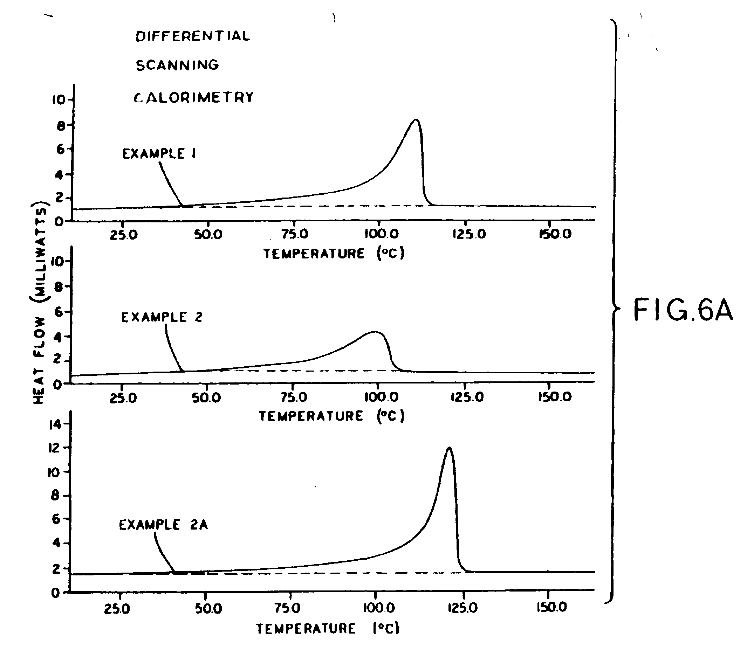

Figures 6 and 6A show the melting point by differential scanning calorimetry results for the resins made by the process of the invention in comparison to some commercial resins. Melting point distributions were determined using a Perkin Elmer DSC-7 operated in the following fashion: About 5-6 mg of sample was heated to 160°C and held at that temperature for 5 minutes. The sample was then cooled at 10°C per minute to a temperature of 0°C and reheated at 10°C per minute. The melting distributions reported here were collected during this reheating at 10°C per minute.

Concentrations of unsaturation in ethylene based polymers was determined by comparisons of IR spectra

of brominated versus original polymer specimens utilizing the following bands:

| | |
|---|---|
| vinylene | 965 $cm^{-1}$ |
| vinyl | 909 $cm^{-1}$ |
| vinylidene | 888 $cm^{-1}$ |

A better understanding of the invention will be had by a review of the above discussion in conjunction with the drawing Figures and the Examples given below.

The process may use any of the known techniques of polymerization including solution, high pressure, and gas-phase polymerization processes.

Various forms of the catalyst system of the metallocene type may be used for polymerization by the process of the invention to achieve polymers of the present invention including those of the homogeneous or the heterogeneous, supported catalyst type wherein the catalyst and alumoxane cocatalyst are together supported or reacted together onto an inert support for polymerization by gas-phase, high pressure, or solution polymerization.

The cyclopentadienyls of the catalyst may be unsubstituted or substituted with hydrogen or hydrocarbyl radicals. The hydrocarbyl radicals may include alkyl, alkenyl, aryl, alkylaryl, arylalkyl, and like radicals containing from about 1-20 carbon atoms or 2 carbon atoms joined together to form a $C_4$-$C_6$ ring.
Exemplary hydrocarbyl radicals include methyl, ethyl, propyl, butyl, amyl, isoamyl, hexyl, isobutyl, heptyl, octyl, nonyl, decyl, cetyl, 2-ethylhexyl and phenyl. Exemplary halogen substituents include chlorine, bromine, flourine and iodine and of these halogen atoms, chlorine is preferred. Exemplary hydrocarboxy radicals are methoxy, ethoxy, propoxy, butoxy and amyloxy.
Illustrative, but non-limiting examples of the metallocene catalyst useful in preparing the polymers of the present invention include bis(cyclopentadienyl)titanium dimethyl, bis(cyclopentadienyl)titanium diphenyl, bis(cyclopentadienyl)zirconium dimethyl, bis(cyclopentadienyl)zirconium diphenyl, bis(cyclopentadienyl)hafnium dimethyl and diphenyl, bis(cyclopentadienyl)titanium di-neopentyl, bis(cyclopentadienyl)zirconium di-neopentyl, bis(cyclopentadienyl)titanium dibenzyl, bis(cyclopentadienyl)zirconium dibenzyl, bis(cyclopentadienyl)vanadium dimethyl; the mono alkyl metallocenes such as bis(cyclopentadienyl)titanium methyl chloride, bis(cyclopentadienyl)titanium ethyl chloride, bis(cyclopentadienyl)titanium phenyl chloride, bis(cyclopentadienyl)zirconium methyl chloride, bis(cyclopentadienyl)zirconium ethyl chloride, bis(cyclopentadienyl)zirconium phenyl chloride, bis(cyclopentadienyl)titanium methyl bromide, bis(cyclopentadienyl)methyl iodide, bis(cyclopentadienyl)titanium ethyl bromide, bis(cyclopentadienyl)titanium ethyl iodide, bis(cyclopentadienyl)titanium phenyl bromide, bis(cyclopentadienyl)titanium phenyl iodide, bis(cyclopentadienyl)zirconium methyl bromide, bis(cyclopentadienyl)zirconium methyl iodide, bis(cyclopentadienyl)zirconium ethyl bromide, bis(cyclopentadienyl)zirconium ethyl iodide, bis(cyclopentadienyl)zirconium phenyl bromide, bis(cyclopentadienyl)zirconium phenyl iodide; the trialkyl metallocenes such as cyclopentadienyltitanium trimethyl, cyclopentadienyl zirconium triphenyl, and cyclopentadienyl zirconium trineopentyl, cyclopentadienylzirconium trimethyl, cyclopentadienylhafnium triphenyl, cyclopentadienylhafnium trineopentyl, and cyclopentadienylhafnium trimethyl.

Other metallocenes which may be usefully employed to prepare the polymers of the invention include the monocyclopentadienyls titanocenes such as, pentamethylcyclopentadienyl titanium trichloride, pentaethylcyclopentadienyl titanium trichloride; bis(pentamethylcyclopentadienyl) titanium diphenyl, the carbene represented by the formula bis(cyclopentadienyl)titanium=$CH_2$ and derivatives of this reagent such as bis(cyclopentadienyl)Ti=$CH_2$.$Al(CH_3)_3$, $(Cp_2TiCH_2)_2$,

$$\overline{Cp_2TiCH_2CH(CH_3)CH_2},\quad Cp_2\overline{Ti\text{-}CHCH_2CH_2};$$

substituted bis(cyclopentadienyl)titanium (IV) compounds such as:
bis(indenyl)titanium diphenyl or dichloride, bis(methylcyclopentadienyl)titanium diphenyl or dihalides; dialkyl, trialkyl, tetra-alkyl and penta-alkyl cyclopentadienyl titanium compounds such as bis(1,2-dimethylcyclopentadienyl)titanium diphenyl or dichloride, bis(1,2-diethylcyclopentadienyl)titanium diphenyl or dichloride and other dihalide complexes; silicon, phosphine, amine or carbon bridged cyclopentadiene complexes, such as dimethyl silyldicyclopentadienyl titanium diphenyl or dichloride, methyl phosphine dicyclopentadienyl titanium diphenyl or dichloride,

methylenedicyclopentadienyl titanium diphenyl or dichloride or other dihalide complexes.

Additional zirconocene catalysts useful according to the present invention include bis(cyclopentadienyl)zirconium dimethyl, bis(cyclopentadienyl)zirconium dichloride, bis(cyclopentadienyl)zirconium methylchloride, pentamethylcyclopentadienyl zirconium trichloride, pentaethylcyclopentadienyl zirconium trichloride, bis(pentamethylcyclopentadienyl)zirconium diphenyl, the alkyl substituted cyclopentadienes, such as bis(ethyl cyclopentadienyl)zirconium dimethyl, bis(β-phenylpropylcyclopentadienyl)zirconium dimethyl, bis(methylcyclopentadienyl)zirconium dimethyl, bis(n-butyl-cyclopentadienyl)zirconium dimethyl, bis(cyclohexylmethylcyclopentadienyl)zirconium dimethyl, bis(n-octyl-cyclopentadienyl)zirconium dimethyl, and haloalkyl and dihalide complexes of the above; dialkyl, trialkyl, tetra-alkyl, and penta-alkyl cyclopentadienes, such as bis(pentamethylcyclopentadienyl) zirconium dimethyl, bis(1,2-dimethylcyclopentadienyl)zirconium dimethyl and dihalide complexes of the above; silicon, phosphorus, and carbon bridged cyclopentadiene complexes such as dimethylsilyldicyclopentadienyl zirconium dimethyl or dihalide, and methylene dicyclopentadienyl zirconiun dimethyl or dihalide, and methylene dicyclopentadienyl zirconium dimethyl or dihalide, carbenes represented by the formula $Cp_2Zr{=}CHP(C_6H_5)_2CH_3$, and derivatives of these compounds such as

$$Cp_2\underbrace{ZrCH_2CH(CH_3)CH_2}.$$

Bis(cyclopentadienyl)hafnium dichloride, bis(cyclopentadienyl)hafnium dimethyl, and bis(cyclopentadienyl)vanadium dichloride are illustrative of other metallocenes.

Various inorganic oxide supports may be used for supported catalyst systems to prepare polymers by the process of the present invention. The polymerizations are generally carried in the temperature range of 0-160°C or even higher. Atmospheric, sub-atmospheric, or super-atmospheric pressure conditions may exist for the polymerization using the metallocene catalyst described above. It is generally preferred to use catalyst compositions at a concentration so as to provide from 1 ppm to 5000 ppm, most preferably 10 ppm to 300 ppm, by weight of transition metal based on the weight of monomers in the polymerization of the ethylene polymers.

A slurry polymerization process may generally use sub-atmospheric or super-atmospheric pressures and temperatures in the range of 40-110°C. In a slurry polymerization, a suspension of solid, particulate polymer is formed in a liquid polymerization medium to which ethylene and comonomers and often hydrogen along with catalyst are added. The liquid employed in the polymerization medium can be alkane or cycloalkane, or an aromatic hydrocarbon such as toluene, ethylbenzene or xylene. The medium employed should be liquid under the conditions of polymerization and relatively inert. Preferably, hexane or toluene is employed.

In a modification, gas-phase polymerization may be used. A gas-phase process utilizes super-atmospheric pressure and temperatures in the range of 50°-120°C. Gas-phase polymerization can be performed in a stirred or fluidized bed of catalyst and product particles in a pressure vessel adapted to permit the separation of product particles from unreacted gases. Thermostated ethylene, comonomer (including diene), hydrogen and an inert diluent gas such as nitrogen can be introduced or recirculated so as to maintain the particles at a temperature of 50°-120°C. Triethylaluminum may be added as needed as a scavenger of water, oxygen, and other adventitious impurities. Polymer product can be withdrawn continuously or semi-continuing at a rate such as to maintain a constant product inventory in the reactor. After polymerization and deactivation of the catalyst, the product polymer can be recovered by any suitable means. In commercial practice, the polymer product can be recovered directly from the gas phase reactor, freed of residual monomer with a nitrogen purge, and used without further deactivation or catalyst removal. The polymer obtained can be extruded into water and cut into pellets or other suitable comminuted shapes. Pigments, antioxidants and other additives, as is known in the art, may be added to the polymer.

The molecular weight of polymer product obtained in accordance with this invention can vary over a wide range, as low as 500 up to 2,000,000 or higher and preferably 1,000 to 500,000.

For the production of polymer product having a narrow molecular weight distribution, it is preferable to deposit only one metallocene on to the inert porous support material and employ said support metallocene together with the alumoxane as the polymerization catalyst.

It is highly desirable to have for many applications, such as extrusion and molding processes, polyethylenes which have a broad molecular weight distribution of the unimodal and/or the multimodal type. Such polyethylenes evidence excellent processability, i.e. they can be processed at a faster throughput rate with lower energy requirements and at the same time such polymers would evidence reduced melt flow perturbations. Such polyethylenes can be obtained by providing a catalyst component comprising at least two different metallocenes, each having different propagation and termination rate constants for ethylene polymerizations. Such rate constants are readily determined by one

of ordinary skill in the art.

The molar ratio of the metallocenes, such as, for example, of a zirconocene to a titanocene in such catalysts, can vary over a wide range, and in accordance with this invention, the only limitation on the molar ratios is the breadth of the Mw distribution or the degree of bimodality desired in the product polymer. Desirably, the metallocene to metallocene molar ratio will be about 1:100 to about 100:1, and preferably 1:10 to about 10:1.

Examples

In the Examples following the alumoxane employed was prepared by adding 76.5 grams ferrous sulfate heptahydrate in 4 equally spaced increments over a 2 hour period to a rapidly stirred 2 liter round-bottom flask containing 1 liter of a 13.1 weight percent solution of trimethylaluminum (TMA) in toluene. The flask was maintained at 50°C and under a nitrogen atmosphere. Methane produced was continuously vented. Upon completion of the addition of ferrous sulfate heptahydrate, the flask was continuously stirred and maintained at a temperature of 50°C for 6 hours. The reaction mixture was cooled to room temperature and was allowed to settle. The clear solution containing the alumoxane was separated by decantation from the insoluble solids.

Molecular weights were determined on a Water's Associates Model No. 150C GPC (Gel Permeation Chromatography). The measurements were obtained by dissolving polymer samples in hot trichlorobenzene and filtered. The GPC runs are performed at 145°C in trichlorobenzene at 1.0 ml/min flow using styragel columns from Perkin Elmer, Inc. 0.1 percent solutions (300 microliters of trichlorobenzene solution) were injected and the samples were run in duplicate. The integration parameters were obtained with a Hewlett-Packard Data Module.

Example 1

A 1-liter stainless steel pressure vessel, equipped with an incline blade stirrer, an external water jacket for temperature control, a septum inlet and vent line, and a regulated supply of dry ethylene and nitrogen, was dried and deoxygenated with a nitrogen flow. 500 ml of dry, degassed hexane were charged directly into the pressure vessel. 100 ml of purified 1,4-hexadiene was then charged into vessel with a gas tight syringe. 10.0 ml of 0.785 molar (in total aluminum) methyl alumoxane was injected into the vessel by a gas tight syringe through the septum inlet and the mixture was stirred at 1,200 rpms and 60°C for 5 minutes at 0 bar gauge of nitrogen. Bis(n-butyl-cyclopentadienyl)zirconium dichloride (1 mg) dissolved in 1.0 ml of dry, distilled toluene was injected through the septum inlet into the vessel. After 1 minute, ethylene at 4.134 bar gauge (60 psig) was admitted and while the reaction vessel was maintained at 60°C. The ethylene was passed into the vessel for 10 minutes at which time the reaction was stopped by rapidly venting and cooling. 24.5 g of ethylene/hexadiene copolymer was recovered after evaporation of the liquid component under nitrogen.

Example 1A

A 1-liter stainless steel pressure vessel, equipped with an incline blade stirrer, an external water jacket for temperature control, a septum inlet and vent line, and a regulated supply of dry ethylene and nitrogen, was dried and deoxygenated with a nitrogen flow. 500 ml of dry, degassed toluene and 100 ml of dry, degassed 1,4-hexadiene was injected directly into the pressure vessel. 10.0 ml of 0.785 molar (in total aluminum) methyl alumoxane solution in toluene was injected into the vessel by a gas tight syringe through the septum inlet and the mixture was stirred at 1,200 rpms and 70°C for 5 minutes at 0 bar gauge of nitrogen. Bis(n-butylcyclopentadienyl)zirconium dichloride (0.10 mg) dissolved in 1.0 ml of dry, distilled toluene was injected through the septum inlet into the vessel. After 1 minute, ethylene at 3.445 bar gauge (50 psig) was admitted and while the reaction vessel was maintained at 70°C. The ethylene was passed into the vessel for 30 minutes at which time the reaction was stopped by rapidly venting and cooling. 9.6 g of ethylene/1,4-hexadiene copolymer was recovered after evaporation of the liquid components under nitrogen.

Example 2

A 1-liter stainless steel pressure vessel, equipped with an incline blade stirrer, an external water jacket for temperature control, a septum inlet and vent line, and a regulated supply of dry ethylene and nitrogen, was dried and deoxygenated with a nitrogen flow. 500 ml of dry, degassed toluene, 50 ml of purified 1-hexene, and 50 ml of dry, degassed 1,4-hexadiene were injected directly into the pressure vessel. 10.0 ml of 0.785 molar (in total aluminum) methyl alumoxane solution in toluene was injected into the vessel by a gas tight syringe through the septum inlet and the mixture was stirred at 1,200 rpms and 70°C for 5 minutes at 0 bar gauge of nitrogen. Bis(n-butyl-cyclopentadienyl)zirconium dichloride (0.10 mg) dissolved in 0.10 ml of dry, distilled toluene was injected through the septum inlet into the vessel. After 1 minute, ethylene at 3.445 bar gauge (50 psig) was admitted and while the reaction vessel was

maintained at 70°C. The ethylene was passed into the vessel for 30 minutes at which time the reaction was stopped by rapidly venting and cooling. 5.1 g of ethylene-1-hexene-1,4-hexadiene terpolymer was recovered after evaporation of the liquid components under nitrogen.

Example 2A

A 1-liter stainless steel pressure vessel, equipped with an incline blade stirrer, an external water jacket for temperature control, a septum inlet and vent line, and a regulated supply of dry ethylene and nitrogen, was dried and deoxygenated with a nitrogen flow. 500 ml of dry, degassed hexane was added directly into the pressure flow. 100 ml of purified 4-vinylcyclohexene was charged into reaction vessel with a gas tight syringe. 10.0 ml of 0.785 molar (in total aluminum) methyl alumoxane solution in toluene was injected into the vessel by a gas tight syringe through the septum inlet and the mixture was stirred at 1,200 rpms and 70°C for 5 minutes at 0 bars gauge of nitrogen. Bis(n-butylcyclopentadienyl)zirconium dichloride (0.1 mg) dissolved in 1.0 ml of dry, distilled toluene was injected through the septum inlet into the vessel. After 1 minute, ethylene at 4.27 bar gauge (62 psig) was admitted and while the reaction vessel was maintained at 60°C. The ethylene was passed into the vessel for 10 minutes at which time the reaction was stopped by rapidly venting and cooling. 25.6 g of ethylene/4-vinyl cyclohexene copolymer polyethylene was recovered after evaporation of the liquid components under nitrogen.

Example 2B

A 1-liter stainless steel pressure vessel, equipped with an incline blade stirrer, an external water jacket for temperature control, a septum inlet and vent line, and a regulated supply of dry ethylene and nitrogen, was dried and deoxygenated with a nitrogen flow. 250 ml of dry, degassed toluene and 200 ml of purified 4-vinycyclohexene were injected directly into the pressure vessel. 10.0 ml of 0.785 molar (in total aluminum) methyl alumoxane in toluene solution was injected into the vessel by a gas tight syringe through the septum inlet and the mixture was stirred at 1,200 rpms and 70°C for 5 minutes at 0 bar gauge of nitrogen. Bis(n-butylcyclopentadienyl)zirconium dichloride (0.05 mg) dissolved in 0.050 ml of dry, distilled toluene was injected through the septum inlet into the vessel. After 1 minute, ethylene at 1.72 bar gauge (25 psig) was admitted and while the reaction vessel was maintained at 70°C. The ethylene was passed into the vessel for 3 minutes at which time the reaction was stopped by rapidly venting and cooling. 7.3 g of ethylene/4-vinylcyclohexene copolymer was recovered after evaporation of the liquid components under nitrogen.

The structural properties of the polymers of the Examples are reflected in the drawing figures and reported in the following Table. Data on commercial polymers are reported in the Table and displayed in the drawing figures for comparison.

TABLE

| RESIN | COMONOMER CONTENT (MOLE PERCENT) TYPE | AMOUNT | TYPE | AMOUNT | Mw (X 10³) | Mw/Mn | COMPOSITION DISTRIBUTION | CLUSTER INDEX | MELTING BEHAVIOUR DISTRIBUTION | PEAK M.P. (°C) |
|---|---|---|---|---|---|---|---|---|---|---|
| EXAMPLE 1 | 1,4 HEXADIENE | 2.3 | - | - | 70.5 | 1.75 | NARROW | 5.0 | NARROW | 111.9 |
| EXAMPLE 2 | 1,4 HEXADIENE | 2.0 | HEXENE-1 | 1.9 | 62.6 | 1.80 | - | -[1] | NARROW | 101.0 |
| EXAMPLE 2A | 4-VINYLCYCLO-HEXENE | 0.4 | - | - | 95.3 | 1.87 | NARROW | - | NARROW | 120.5 |
| 3 - EXXON LL 3001 | HEXENE-1 | 3.7 | - | - | 103.1 | 3.30 | BROAD | 12.1 | BROAD | 124.6 |
| 4 - DOWLOX 2045 | OCTENE-1 | 2.8 | - | - | 114.6 | 3.67 | BROAD | 9.5 | BROAD | 124.3 |
| 5 - EXXON LL 1001 | BUTENE-1 | 4.4 | - | - | 118.0 | 3.33 | BROAD | 11.7 | BROAD | 121.6 |
| 6 - DUPONT SCLAIR 110 | BUTENE-1 | 3.3 | - | - | 115.7 | 3.79 | BROAD | 5.0 | BROAD | 118.7 |
| 7 - MITSUI 2020L | 4-METHYL-PENTENE-1 | 3.5 | - | - | 92.3 | 2.6 | BROAD | - | BROAD | 124.5 |
| 8 - LLDPE[2] | BUTENE-1 | 5.2 | - | - | 96.1 | 1.78 | NARROW | 9.6 | NARROW | 94.0 |

1. ANALYZED BUT ONLY LOW QUALITY SPECTRA OBTAINED - IMPRECISE RESULT.

2. LABORATORY PREPARATION WITH A SOLUBLE VANADIUM OXYCHLORIDE/ETHYL ALUMINUM SESQUICHLORIDE CATALYST.

## Claims

1. A process for preparing an interpolymer of ethylene and at least one comonomer having a molecular weight distribution of 3.0 or less comprising from 0.1 to 10 mole % of an alpha, internal non-conjugated diene and from 0 to 15 weight percent of an alpha-olefin which process includes polymerising ethylene and comonomer using a metallocene catalyst of the formula $(Cp)_mMR_nR^1{}_p$ where Cp is a substituted cyclopentadienyl ring, M is group IVE, VB or VIB transition metal; R and R' are independently selected halogen, hydrocarbyl group or hydroxycarboxyl groups having from 1-20 carbon atoms m= 1-3, n = 0-3; p = 0-3 and the sum of $m + n + p$ equals the oxidation state of M and alumoxane, the resulting interpolymer having incorporated in its structure at least 3 mole percent units of said at least one comonomer and having a cluster index of 9 or less determined by the formula $10[(X)-(EXE)]\ [2(X)^2-(X)-^3]$ where (X) is the mole % of total comonomer units in the copolymer and (EXE) is the mole fraction of the triad segment of 3 monomer units containing ethylene-comonomer-ethylene.

2. Process according to claim 1 include the resulting interpolymer has a molecular weight distribution of 2.5 or less.

3. Process according to claim 1 or claim 2 in which the resulting interpolymer has a comonomer composition distribution wherein more than 55 weight percent of the polymer is within 50 percent of the median comonomer content in mole percent, of said composition.

4. Process according to any of the preceding claims in which the resulting interpolymer has a cluster index of 7 or less.

5. Process according to any of the preceding claims wherein the resulting interpolymer comprises units derived from ethylene, said alpha, internal, non-conjugated diene, and at least one other polymerisable unsaturated comonomer such as propylene, butene-1 or hexene-1 comonomer.

6. Process according to any of the preceding claims wherein the resulting interpolymer has incorporated in its structure at least 3 mole percent of units of said alpha, internal non-conjugated diene.

7. Process according to any of the preceding claims wherein said resulting interpolymer comprises at least 5 mole percent units of said at least one comonomer.

8. Process according to any of the preceding claims wherein said diene is a linear diene such as 1,4-hexadiene.

9. Process according to any of the preceding claims wherein said diene is a cyclic diene such as vinyl cyclohexene.

## Patentansprüche

1. Verfahren zur Herstellung eines Interpolymers aus Ethylen und mindestens einem Comonomer mit einer Molekulargewichtsverteilung von 3,0 oder weniger, das 0,1 bis 10 Mol.% eines $\alpha$-innenständigen, nicht konjugierten Diens und 0 bis 15 Gew.% eines $\alpha$-Olefins umfaßt, wobei das Verfahren die Polymerisation von Ethylen und Comonomer unter Verwendung von einem Metallocenkatalysator mit der Formel $(CP)_mMR_nR^1{}_p$, in der Cp ein substituierter Cyclopentadienylring ist, M ein Gruppe IVE, VB oder VIB Übergangsmetall ist, R und $R^1$ unabhängig ausgewählt Halogen, Kohlenwasserstoffgruppen oder Kohlenwasserstoffcarboxygruppen mit 1 bis 20 Kohlenstoffatomen sind, m gleich 1 bis 3 ist, n gleich 0 bis 3 ist, p gleich 0 bis 3 ist und die Summe aus $m+n+p$ dem Oxidationszustand von M entspricht, und Alumoxan einschließt, wobei das resultierende Interpolymer in seiner Struktur mindestens 3 Mol.%-Einheiten des mindestens einen Comonomers eingebaut hat und einen Cluster-Index von 9 oder weniger aufweist, bestimmt durch die Formel $10[(x)-(EXE)]/[2(X)^2-(x^3)]$ , in der (x) die Mol.% der gesamten Comonomereinheiten in dem Copolymer und (EXE) der Molenbruch des Triadensegments von 3 Monomereinheiten ist, das Ethylen-Comonomer-Ethylen enthält.

2. Verfahren nach Anspruch 1, bei dem das resultierende Interpolymer eine Molekulargewichtsverteilung von 2,5 oder weniger aufweist.

3. Verfahren nach Anspruch 1 oder Anspruch 2, bei dem das resultierende Interpolymer eine Zusammensetzungsverteilung des Comonomers aufweist, bei der mehr als 55 Gew.% des Polymers um höchstens 50 % vom Mittelwert des Comonomergehaltes in Mol.% der Zusammensetzung abweichen.

4. Verfahren nach einem der vorhergehenden Ansprüche, bei dem das resultierende Interpolymer einen Cluster-Index von 7 oder weniger aufweist.

5. Verfahren nach einem der vorhergehenden Ansprüche, bei dem das resultierende Interpolymer Einheiten umfaßt, die von Ethylen, dem $\alpha$-innenständigen, nicht konjugierten Dien und mindestens einem weiteren, polymerisierbaren, ungesättigten Comonomer wie Propylen-, Buten-1- oder Hexen-1-Comonomer abgeleitet sind.

6. Verfahren nach einem der vorhergehenden Ansprüche, bei dem das resultierende Interpolymer in seine Struktur mindestens 3 Mol.% Einheiten von dem $\alpha$-innenständigen, nicht konjugierten Dien eingebaut hat.

7. Verfahren nach einem der vorhergehenden Ansprüche, bei dem das resultierende Interpolymer mindestens 5 Mol.% Einheiten des mindestens einen Comonomers umfaßt.

8. Verfahren nach einem der vorhergehenden Ansprüche, bei dem das Dien ein lineares Dien wie 1,4-Hexadien ist.

9. Verfahren nach einem der vorhergehenden Ansprüche, bei dem das Dien ein cyclisches Dien wie Vinylcyclohexen ist.

**Revendications**

1. Procédé de préparation d'un interpolymère d'éthylène et d'au moins un comonomère ayant une distribution des poids moléculaires égale ou inférieure à 3,0, comprenant 0,1 à 10 moles % d'un alpha-diène non conjugué interne et 0 à 15 % en poids d'une alpha-oléfine, procédé qui comprend la polymérisation d'éthylène et d'un comonomère au moyen d'un catalyseur du type métallocène de formule $(Cp)_mMR_nR^1p$, dans laquelle Cp représente un noyau cyclopentadiényle substitué, M représente un métal de transition du Groupe IVB, VB ou VIB ; R et $R^1$ sont choisis indépendamment entre un halogène, un groupe hydrocarbyle et des groupes hydrocarboxyle ayant 1 à 20 atomes de carbone ; m a une valeur de 1 à 3, n a une valeur de 0 à 3 ; p a une valeur de 0 à 3 et la somme m+n+p est égale à l'état d'oxydation de M et de l'alumoxane, l'interpolymère résultant renfermant dans sa structure au moins 3 moles % de motifs dudit comonomère d'au moins un type et possédant un indice d'agrégation égal ou inférieur à 9, déterminé par la formule $10[(X)-(EXE)]/[2(X)^2-(X)^3]$ dans laquelle (X) représente le pourcentage molaire de motifs comonomériques totaux dans le copolymère et (EXE) représente la fraction molaire du segment consistant en une triade de 3 motifs monomériques éthylène-comonomère-éthylène.

2. Procédé suivant la revendication 1, dans lequel l'interpolymère résultant possède une distribution des poids moléculaires égale ou inférieure à 2,5.

3. Procédé suivant la revendication 1 ou la revendication 2, dans lequel l'interpolymère résultant possède une distribution de composition des comonomères dans laquelle plus de 55 % en poids du polymère sont compris dans les limites de 50 % de la teneur moyenne en comonomères, en pourcentage molaire de ladite composition.

4. Procédé suivant l'une quelconque des revendications précédentes, dans lequel l'interpolymère résultant possède un indice d'agrégation égal ou intérieur à 7.

5. Procédé suivant l'une quelconque des revendications précédentes, dans lequel l'interpolymère résultant comprend des motifs dérivés de l'éthylène, de l'alpha-diène non conjugué interne et d'au moins un autre comonomère insaturé polymérisable tel que le propylène, le butène-1 ou l'hexène-1.

6. Procédé suivant l'une quelconque des revendications précédentes, dans lequel l'interpolymère résultant renferme dans sa structure au moins 3 moles % de motifs de l'alpha-diène non conjugué interne.

7. Procédé suivant l'une quelconque des revendications précédentes, dans lequel l'interpolymère résultant comprend au moins 5 moles % de motifs du comonomère d'au moins un type.

8. Procédé suivant l'une quelconque des revendications précédentes, dans lequel le diène est un diène linéaire tel que le 1,4-hexadiène.

9. Procédé suivant l'une quelconque des revendications précédentes, dans lequel le diène est un diène cyclique tel que le vinylcyclohexène.

MOLE % COMONOMER
10
5
MORE
1-OLEFIN
CLUSTERING
THAN
A
RANDOM
DISTRIBUTION
LESS
1-OLEFIN
CLUSTERING
THAN
A
RANDOM
DISTRIBUTION
20
15
10
5
0
RANDOM
CLUSTERING
NO
CLUSTERING

FIG.1

RANDOM
CLUSTERING
NO
CLUSTERING
MOLE % COMONOMER
10
5
RESIN 5
RESIN 8
RESIN 9
RESIN 10
RESIN 6
RESIN 11
RESIN 3
EXAMPLE 1
20
15
10
5
0
CLUSTER INDEX

FIG.2

MOLECULAR WEIGHT DISTRIBUTION
EXAMPLE 1
EXAMPLE 2A
RESIN 3
7.00
6.00
5.00
4.00
3.00
LOG (MW)
WEIGHT % COMONOMER

FIG. 3

EXAMPLE 1
EXAMPLE 2A
RESIN 3
RESIN 4
RESIN 5
RESIN 6
RELATIVE WEIGHT %
ELUTION TEMP (°C)
FIG.4

MOLE % COMONOMER
ELUTION TEMPERATURE (°C)
BUTENE COMONOMER
HEXENE COMONOMER
OCTENE COMONOMER
FIG.5

DIFFERENTIAL
SCANNING
CALORIMETRY
HEAT FLOW (MILLIWATTS)
RESIN 3
RESIN 4
RESIN 5
RESIN 6
RESIN 7
TEMPERATURE (°C)
25.0
50.0
75.0
100.0
125.0
150.0

FIG.6

FIG.6A
DIFFERENTIAL SCANNING CALORIMETRY
EXAMPLE 1
EXAMPLE 2
EXAMPLE 2A
HEAT FLOW (MILLIWATTS)
TEMPERATURE (°C)
25.0
50.0
75.0
100.0
125.0
150.0